# EUROPÄISCHE PATENTSCHRIFT

(11) **EP 2 260 274 B1**
(45) Veröffentlichungstag und Bekanntmachung des Hinweises auf die Patenterteilung: **22.10.2014**
(21) Anmeldenummer: 09729087.8
(22) Anmeldetag: 27.03.2009
(51) Int. Cl.: G01F 23/284

(54) **FÜLLSTANDSCHALTER UND SENSORELEMENT FÜR EINEN FÜLLSTANDSCHALTER**
FILL LEVEL SWITCH AND SENSOR ELEMENT FOR A FILL LEVEL SWITCH
CAPTEUR DE NIVEAU ET ÉLÉMENT DE DÉTECTION POUR UN CAPTEUR DE NIVEAU

(30) Priorität: 01.04.2008 DE 102008016829
(43) Veröffentlichungstag der Anmeldung: 15.12.2010
(73) Patentinhaber: KROHNE MESSTECHNIK GMBH & CO. KG, 47058 Duisburg (DE)
(72) Erfinder: NEUBURGER, Stefan, 55271 Stadecken-Elsheim (DE); MUSCH, Thomas, 44879 Bochum (DE)
(74) Vertreter: Gesthuysen, Michael
(86) Internationale Anmeldenummer: PCT/EP2009/002274
(87) Internationale Veröffentlichungsnummer: WO 2009/121530

(56) Entgegenhaltungen:
- EP-A1- 1 128 169
- EP-A2- 0 866 321
- DE-A1- 10 115 150
- DE-A1-102005 057 053
- JP-A- 2004 093 213

## Beschreibung

Die Erfindung betrifft einen Füllstandschalter zur Erfassung des Füllstandes eines Mediums in einem Behälter, mit einem Sensorelement zur Kontaktierung des Mediums, mit einem Sender zur Beaufschlagung des Sensorelements mit einem elektromagnetischen Sendesignal und mit einer Auswerteeinheit zur Erfassung eines Empfangssignals von dem Sensorelement, wobei das Sensorelement eine Leitung zur Führung des Sendesignals umfaßt.

Füllstandschalter sind seit mehreren Jahrzehnten in der industriellen Prozeßmeßtechnik bekannt und dienen der Erkennung des Füllstandes eines Mediums in einem Behälter, wobei das Medium bei Erreichen eines bestimmten Füllstandes oder eines bestimmten Füllstandbereiches auf das Sensorelement einwirkt. Aufgrund der Beeinflussung des Sensorelements durch das Medium verändert sich - je nach Ausfuhrungsform des Füllstandschalters - eine bestimmte Meßgröße des Sensorelements und bei Überschreitung einer bestimmten Schwelle des Meßwerts gilt dann ein bestimmter Füllstand als erfaßt.

Wenn im folgenden von Füllstandsschaltern die Rede ist, dann ist damit nicht einschränkend gemeint, daß der Füllstandschalter tatsächlich einen Schaltvorgang auslöst, vielmehr ist damit allgemeiner gemeint, daß ein bestimmter Füllstand durch Vergleich eines Meßwertes mit einem - vorgebbaren - Schwellwert erkennbar ist und/oder der Füllstandschalter allein schon durch seine Konstruktion nur dazu geeignet ist, einen im wesentlichen punktuellen Füllstand zu erkennen.

Die bei Füllstandschaltern zum Einsatz kommenden Meßprinzipien beruhen teils auf der Auswertung von mechanischen oder elektrischen Schwingungen oder einfach auf der Auswertung der Veränderung eines Leitwertes (konduktive Füllstandschalter). Gemeinsam ist allen betrachteten Füllstandschaltern, daß das Medium, dessen Füllstand zu erfassen ist, mit dem Sensorelement in Kontakt gerät bzw. geraten muß.

Füllstandschalter, die auf der Auswertung einer mechanischen Schwingung beruhen, werden gerne eingesetzt, da das Meßprinzip für viele Medien geeignet ist und sich recht robust gegenüber der Schwankung bestimmter Medieneigenschaften verhält, wie z. B. gegenüber der Dichte und der Viskosität eines Mediums. Bei diesen Füllstandschaltern wird die Schwingung einer Schwinggabel ausgewertet, die durch Aktuatoren zu einer Resonanzschwingung angeregt wird, die durch ein die Schwinggabel umgebendes Medium gedämpft und auch in ihrer Frequenz geändert wird.

Nachteilig bei derartigen Füllstandschaltern ist jedoch das notwendige Hineinragen des Sensorelements in das zu erfassende Medium, die Abhängigkeit der Messung von der Einbaulage des Füllstandschalters sowie eine unter Umständen problematische Reinigung des als Schwinggabel ausgestalteten Sensorelements, da bei Besprühen des Behälterinnenraums stets Gefahr einer "Schattenbildung" gegeben ist, also die Gefahr besteht, daß sich das Sensorelement teilweise selbst verdeckt und die eingesetzte Reinigungsflüssigkeit so nicht alle Bereiche des Sensorelements erreichen kann.

Auch andere Grenzwertschalter, wie z. B. konduktive Grenzwertschalter ragen vergleichsweise weit in das zu erfassende Medium hinein, selbst wenn das als eine Elektrode oder mehrere Elektroden ausgestaltete Sensorelement nur stummeiförmig ausgebildet ist. Die von dem Sensorelement umfaßte Leitung kontaktiert die Elektroden, wobei das Sendesignal meist aus einer einfachen Wechselspannung besteht, die - je nach Leitfähigkeit des zu erfassenden Mediums - unterschiedliche große Meßströme hervorruft. In solchen Fällen, in denen das Medium nicht mit einem dauerhaft wirkenden elektrischen Wechselfeld beaufschlagt werden darf, verbietet sich der Einsatz solcher konduktiver Grenzwertschalter; darüber hinaus existieren hier - wie zuvor bei den Schwinggabel-Füllstandschaltern beschrieben - auch wieder Probleme hinsichtlich der Reinigung, was insbesondere bei Lebensmittel- und Hygieneanwendungen relevant ist.

J P 2004093213 offenbart eine Vorrichtung zur Messung des Feuchtigkeitsgehalts von Erdreich, mit einem Sensorelement, mit einem Sender zur Beaufschlagung des Sensorelements mit einem elektromagnetischen Sendesignal und mit einer Auswerteeinheit zur Erfassung eines Empfangssignals von dem Sensorelement, wobei das Sensorelement eine Leitung zur Führung des Sendesignals umfaßt, wobei die Leitung des Sensorelements als mäanderförmige Microstrip-Leitung ausgestaltet ist.

Aufgabe der vorliegenden Erfindung ist es, die aufgezeigten Nachteile bei bekannten Füllstandschaltern - zumindest teilweise - zu vermeiden, insbesondere einen Füllstandschalter anzugeben, dem ein robustes Meßprinzip zugrundeliegt und der eine zuverlässige Reinigung gestattet und im wesentlichen von der Einbauposition unabhängige Meßergebnisse erzielt.

Die aufgezeigte Aufgabe ist erfindungsgemäß zunächst und im wesentlichen bei dem in Rede stehenden Füllstandsschalter dadurch gelöst, daß die Leitung des Sensorelements als Verzögerungsleitung ausgestaltet ist, das Sensorelement ein in Einbauposition des Füllstandschalters dem Medium zugewandtes Fenster aufweist und wenigstens einen Teil der Leitung über das Fenster von dem Medium elektrisch beeinflußbar ist.

Eine Verzögerungsleitung ist hier grundsätzlich eine elektrische Leitung, über die ein elektromagnetisches Signal - das Sendesignal - geführt werden kann, wie es beispielsweise aus der Zeitbereichs-Reflektometrie, auch als Time-Domain Reflectometry (TDR) bezeichnet, bekannt ist. Der erfindungsgemäße Füllstandschalter basiert damit grundsätzlich auf dem Prinzip der Laufzeitmessung, d. h. es wird die Tatsache der endlichen Ausbreitungsgeschwindigkeit von elektromagnetischen Signalen durch die Leitung ausgenutzt, wobei das Zeitintervall gemessen wird, das das Sendesignal - eine ausgesendete elektromagnetische Welle - benötigt, um von dem Sender oder der Einspeisequelle in die Leitung bis zu einer Beeinflussungsstelle der Verzögerungsleitung und zurück zur Auswerteeinheit zu gelangen. Der hier genutzte physikalische Effekt besteht darin, daß eine elektromagnetische Welle überall dort in einem Ausbreitungsmedium - hier in der Leitung - teilweise reflektiert und teilweise transmittiert wird, wo die Materialeigenschaften, also beispielsweise die Permitivität oder die Permeabilität, eine Unstetigkeitsstelle aufweisen oder wo der Induktivitätsbelag oder der Kapazitätsbelag der Anordnung - beispielsweise durch eine geometrische Unstetigkeit - eine Unstetigkeitsstelle aufweist.

Bei einem Füllstandschalter besteht die Aufgabe natürlich nicht darin, über eine exakte Messung der Laufzeit den von dem hin- und zurücklaufenden Sendesignal durchlaufenen Weg exakt zu bestimmen, vielmehr besteht das Interesse hauptsächlich darin, über eine an einem Impedanzsprung hervorgerufene Reflexion des Sendesignals zu erkennen, ob das Sensorelement von dem Medium erreicht worden ist oder nicht.

Eine Reflexion einer über eine Leitung geführten elektromagnetischen Welle ist praktisch mit jeder elektrischen Leitung möglich, auch ohne daß diese speziell als Verzögerungsleitung ausgestaltet ist. Bei dem erfindungsgemäßen Füllstandschalter ist die Leitung als Verzögerungsleitung ausgestaltet, um die zu messenden Zeitintervalle in einen handhabbaren, also in einen meßtechnisch verwertbaren Bereich zu überführen.

In einer bevorzugten Ausgestaltung der Erfindung ist die Leitung zumindest teilweise in einer flächigen Konfiguration angeordnet, die ganz bevorzugt eine flächig dichte Konfiguration ist, so daß die Verzögerungsleitung insgesamt von ihrer geometrischen Ausdehnung her recht konzentriert ist. Besonders vorteilhaft ist es zudem, wenn die Leitung insgesamt aus einer Hinleitung und einer Rückleitung besteht, wobei das eine Ende der Hinleitung und das eine Ende der Rückleitung mit dem Sender- und/oder der Auswerteeinheit verbunden bzw. verbindbar sind. Derartige Leitungen haben einen - je nach Auslegung - vergleichsweise großen Induktivitäts- und/oder Kapazitätsbelag, so daß die Ausbreitungsgeschwindigkeit einer elektromagnetischen Welle auf einer solchen Leitung vergleichsweise klein ist, denn die Ausbreitungsgeschwindigkeit einer elektromagnetischen Welle auf einer Leitung entspricht dem Kehrwert der Wurzel aus der Induktivität pro Längeneinheit und der Kapazität pro Längeneinheit dieser Leitung. In diesem Zusammenhang ist es vorteilhaft, wenn das andere Ende der Hinleitung und das andere Ende der Rückleitung über Verbindungsmittel elektrisch miteinander verbunden oder verbindbar sind. Durch geeignete Dimensionierung dieses Verbindungsmittels läßt sich beispielsweise erreichen, daß im unbeeinflußten Zustand der Leitung keine Reflexionen des Sensorsignals auftreten.

Bei einer weiteren vorteilhaften Ausgestaltung der Erfindung ist die flächige Konfiguration der Leitung nach Art einer Spirale oder nach Art eines Mäanders oder beispielsweise auch unter Verwendung von verbundenen Kreissegmenten ausgestaltet. Diese Strukturen haben den Vorteil, daß eine verhältnismäßig lange Leitung auf einer vergleichsweise kleinen Fläche realisiert werden kann, wobei darauf zu achten ist, daß der Verlauf so realisiert ist, daß sich an Biegungen der Leitung keine unbeabsichtigten Reflexionen des Sendesignals ergeben. Eine Spiralstruktur hat darüberhinaus den Vorteil, das das ermittelte Meßsignal nur in sehr geringem Umfang von der Einbaulage des Füllstandschalters bzw. des Sensorelements abhängt.

Erfindungsgemäß ist die Leitung des Sensorelements auf oder in wenigstens einer Trägerschicht, insbesondere einer planaren Trägerschicht, realisiert, wobei es sich bei der Trägerschicht insbesondere um eine Keramikschicht handelt, bevorzugt um eine Niedertemperatur- oder eine Hochtemperatur-Einbrand-Keramik. Die Verwendung dieser Leiterplattentechnologien bringt den Vorteil mit sich, daß beliebige Leiterstrukturen mit geringem Aufwand gefertigt werden können, wobei die entstehende Schichtkeramik hohen Festigkeitsanforderungen genügt.

Die vorgenannten Leiterplattentechnologien bieten hinsichtlich der Erfindung einen Vorteil, bei der das Fenster durch eine dünne dielektrische Schicht im elektrisch beeinflußbaren Bereich der Leitung gebildet ist, insbesondere kann es sich dabei um eine Keramikschicht handeln. Eine solche Schicht kann - beispielsweise durch eine keramische Folie - extrem dünn gefertigt werden bei gleichzeitiger Realisierung eines hohen Schutzes gegen Korrosion. In diesem Zusammenhang hat es sich auch als vorteilhaft herausgestellt, eine Glasschicht zu verwenden.

Durch die erfindungsgemäße Realisierung eines Fensters im Bereich der Verzögerungsleitung ist es insbesondere möglich, den Beeinflussungsbereich der Leitung durch das Medium stark einzuschränken, womit die Laufzeitschwankung der zu erwartenden Reflexionssignale sehr gering wird. Der Rahmen des Fensters kann insbesondere durch einen weiteren mediumseitigen Auftrag auf die Oberfläche des Sensorelements realisiert werden, insbesondere durch eine weitere Keramikschicht oder durch mehrere weitere Keramikschichten.

In einer anderen vorteilhaften Ausgestaltung der Erfindung wird der Rahmen des Fensters funktional dadurch gebildet, daß die im Bereich des Fensters verlaufenden Teile der Leitung auf oder in einer oberen Trägerschicht vorgesehen sind und die jenseits des Fensters verlaufenden Teile der Leitung auf oder in einer tieferen Trägerschicht vorgesehen sind. Diese Ausgestaltung hat den Vorteil, daß mediumseitig eine ebene Abschlußfläche des Sensorelements realisierbar ist bei gleichzeitig präziser Definition des Fensters, durch das das Medium die Leitung beeinflussen kann.

Bei einer besonders bevorzugten Ausgestaltung der Erfindung ist vorgesehen, daß die Leitung oder die Umgebung im Einflußbereich der Leitung wenigstens eine elektrische Soll-Unstetigkeitsstelle aufweist. Diese Soll-Unstetigkeitsstelle bildet einen Impedanzsprung und ruft eine gewollte Teilreflexion des Sendesignals an immer gleicher Stelle hervor. Diese Soll-Reflexion an der Soll-Unstetigkeitsstelle kann beispielsweise zu einer Funktionsprüfung des Füllstandschalters bzw. des Sensorelements herangezogen werden, ist nämlich ein Beleg dafür, daß das Sendesignal - jedenfalls bis zur Soll-Unstetigkeitsstelle - auf die Leitung und zurück gerät.

Die elektrische Soll-Unstetigkeitsstelle kann beispielsweise im Bereich außerhalb des Fensters vorgesehen werden, was eine gewisse zeitliche Beabstandung des Soll-Reflexionssignals von einem durch eine Beeinflussung der Leitung im Bereich des Fensters hervorgerufenen Reflexion des Sendesignals gewährleistet. Alternativ oder zusätzlich kann die Soll-Unstetigkeitsstelle im Bereich innerhalb des Fensters vorgesehen sein, hier insbesondere im Bereich des anderen Endes der Hinleitung und des anderen Endes der Rückleitung. Durch eine solche elektrische Soll-Unstetigkeitsstelle wird sichergestellt, daß die Funktionsfähigkeit der gesamten Leitung feststellbar ist, wenn ein reflektiertes Sendesignal zeitverzögert wieder an dem eingangsseitigen Ende der Leitung auftritt.

Bei einer weiteren bevorzugten Ausgestaltung der Erfindung sind bzw. ist auf der dem Medium abgewandten Seite des Sensorelements der Sender und/oder die Auswerteeinheit angeordnet. Dies ist besonders leicht zu realisieren, wenn die Trägerschicht eine Keramikschicht ist, die in der LTCC- oder der HTCC-Technologie gefertigt ist (LTCC = Low Temperature Cofired Ceramics; HTCC = High Temperature Cofired Ceramics). Hier bietet es sich insbesondere an, den Sender und/oder die Auswerteeinheit auf der dem Medium abgewandten Seite der Trägerschicht anzuordnen bzw. auf oder in der dem Medium abgewandten äußersten Keramikschicht des Sensorelements. Hier können dann nicht nur elektronische Bauelemente in Leitertechnologie gefertigt werden, sondern auch beliebige Bauelemente, beispielsweise in SMD-Technologie, aufgebracht und bestückt werden.

Bei einer weiteren Ausgestaltung der Erfindung ist die dem Medium abgewandte Seite des Sensorelements von einem Gehäuse zumindest teilweise umgeben, insbesondere von einem metallischen Gehäuse, was hinsichtlich der elektromagnetischen Abschirmung aber auch hinsichtlich der Robustheit vorteilhaft ist.

Bei einer bevorzugten Ausgestaltung des Füllstandschalters ist auf oder in der dem Medium zugewandten Außenseite des Sensorelements eine Elektrodenstruktur zur Leitfähigkeitsmessung vorgesehen, was die Einsetzbarkeit des Füllstandschalters insgesamt erhöht. Aufgrund der Leitfähigkeitsmessung ist es möglich, eine redundante Information über den Beeinflussungszustand des Füllstandschalters bzw. des Sensorelements des Füllstandschalters zu erhalten. Ferner eignet sich die Elektrodenstruktur zur Leitfähigkeitsmessung auch dazu, Anhaftungen an dem Sensorelement zu identifizieren. Für die Leitfähigkeitsmessung hat es sich vorteilhaft herausgestellt, wenn die Elektrodenstruktur insbesondere direkt von dem Medium kontaktierbar ist.

Bei einer weiteren besonders bevorzugten Ausgestaltung der Erfindung ist auf oder in dem Sensorelement eine Antennenstruktur realisiert, mit der elektromagnetische Wellen im wesentlichen in Richtung auf das Medium abstrahlbar und elektromagnetischen Welle aus Richtung des Mediums empfangbar sind, wobei die Antennenstruktur insbesondere als Flachantenne mit gerichteter Strahlungscharakteristik ausgestaltet ist, insbesondere als Panelantenne. Diese zusätzliche Antennenstruktur erlaubt mit einfachen Mitteln zusätzliche Informationen über den Füllstand in dem Behälter zu erlangen und zwar sogar von einem Füllstand der unabhängig von der Kontaktierung des Sensorelements durch das Medium ist. Durch die Antennenstruktur kann auch ein Füllstand des Mediums ermittelt werden, bei dem das Medium von dem Füllstandschalter noch über eine erhebliche Distanz beabstandet ist, es können also über die durch die Leitung erzielbaren Informationen - Medium am Sensorelement vorhanden, kein Medium am Sensorelement vorhanden - weitere Informationen erhalten werden, die einerseits die Funktionalität des Füllstandsschalters über die ursprüngliche Funktion hinweg erweitern, die andererseits aber auch als redundante Informationen genutzt werden können und damit die Ausfallsicherheit und Funktionsüberprüfbarkeit des Füllstandschalters erheblich erhöhen.

Bei einer weiteren bevorzugten Ausgestaltung der Erfindung ist die Antennenstruktur mit der Leitung verbunden oder aber jedenfalls mit der Leitung verbindbar, insbesondere über schaltbaren Verbindungsmittel. In diesem Fall kann die Antennenstruktur über die Leitung gespeist werden und kann das Empfangssignal der Antennenstruktur auch wieder über die Leitung zu der Auswerteeinheit geführt werden. Dadurch können zusätzliche Kontaktierungen durch die Trägerschicht eingespart werden, was besonders vorteilhaft ist, da diese Durchführungen hochfrequenztauglich sein müssen und daher besonders aufwendig und kostenintensiv herzustellen sind. Die Antennenstruktur kann genau wie die Leitung auch auf der Trägerschicht realisiert sein und von einer weiteren Schicht überzogen sein, wobei diese weitere Schicht eine reine Schutzfunktion hat und elektrisch nicht wirksam sein sollte, so daß die Abstrahlung elektromagnetischer Wellen von der Antennenstruktur nicht behindert wird. Vor allem Panelantennen lassen sich so leicht realisieren, wobei Planar-Dipolantennen einfach dadurch herstellbar sind, daß eine geschlossene Reflexions-Leiterschicht, darüber - über eine dielektrische Schicht beabstandet - mehrere Dipol-Elemente und darüber - über eine weitere dielektrische Schicht beabstandet - eine leitende Maske zur Formung der elektromagnetischen Wellen angeordnet ist.

Bei dem erfindungsgemäßen Füllstandschalter sind der Sender und die Auswerteeinheit insbesondere so ausgestaltet, daß die Leitung mit einem elektromagnetischen Signal beaufschlagbar ist und/oder die Antennenstruktur mit einem elektromagnetischen Signal beaufschlagbar ist, die Laufzeit eines an einer Unstetigkeitsstelle der Leitung reflektierten elektromagnetischen Signals bestimmt werden kann und/oder die Laufzeit eines über die Antennenstruktur abgegebenen, an dem Medium reflektierten und von der Antennenstruktur wieder erfaßten elektromagnetischen Signals bestimmt werden kann. Dabei wird aus der bestimmten Laufzeit das Vorhandensein und gegebenenfalls die Beabstandung eines Mediums ermittelt.

Im einzelnen gibt es nun eine Vielzahl von Möglichkeiten, die erfindungsgemäße Sende- und Empfangsvorrichtung auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: ein Ausführungsbeispiel eines erfindungsgemäßen Füllstandschalters in Einbauposition in einem Behälter,
- Fig. 2: die mediumseitige Draufsicht auf den Füllstandschalter gemäß Fig. 1,
- Fig. 3: die mediumseitige Draufsicht auf ein erfindungsgemäßes Sensorelement mit meanderförmiger Leitung,
- Fig. 4a, 4b: die mediumseitige Draufsicht und eine Schnittansicht eines weiteren erfindungsgemäßen Sensorelements mit spiralförmiger Leitung und Fenster,
- Fig. 5: den Schnitt durch ein weiteres Ausführungsbeispiel eines erfindungsgemäßen Sensorelements mit einer Leitung in zwei Trägerschichten,
- Fig. 6: die Draufsicht auf ein erfindungsgemäßes Sensorelement mit einer Leitung mit elektrischer Soll-Unstetigkeitsstelle,
- Fig. 7a, 7b: das Sensorelement gemäß Fig. 5 mit zusätzlicher Elektrodenstruktur zur Leitfähigkeitsmessung und
- Fig. 8a, 8b: das erfindungsgemäße Sensorelement gemäß Fig. 4a, 4b mit zusätzlicher Antennenstruktur.

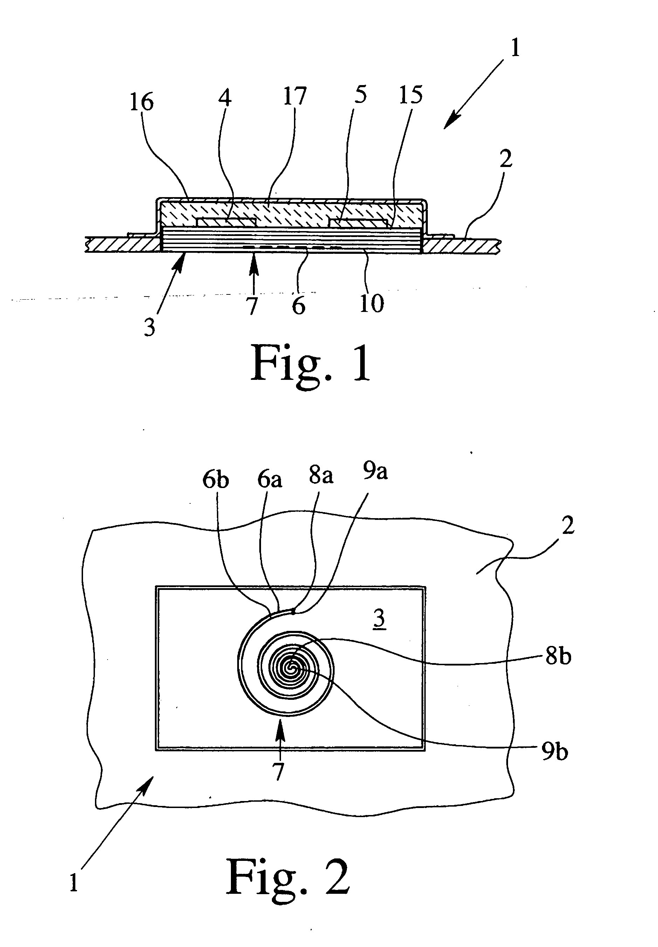

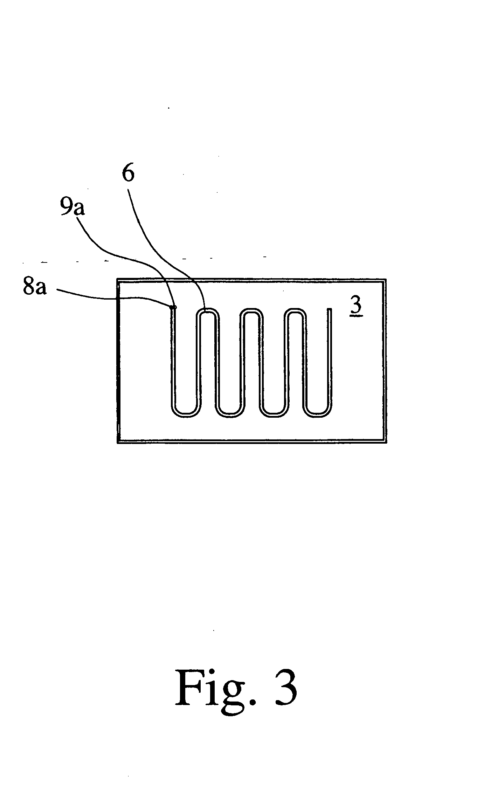

Die Fig. 1 und 2 zeigen einen vollständigen erfindungsgemäßen Füllstandschalter 1 zur Erfassung des Füllstandes eines - nicht dargestellten - Mediums in einem Behälter 2 mit einem Sensorelement 3 zur Kontaktierung des Mediums, mit einem Sender 4 zur Beaufschlagung des Sensorelements 3 mit einem elektromagnetischen Sendesignal und mit einer Auswerteeinheit 5 zur Erfassung eines Empfangssignals von dem Sensorelement 3, wobei das Sensorelement 3 eine Leitung 6 zur Führung des Sendesignals umfaßt. In den anderen Fig. 3 bis 8 ist jeweils ein erfindungsgemäßes Sensorelement 3 dargestellt, wie es zur erfindungsgemäßen Realisierung eines Füllstandschalters benötigt wird.

Alle dargstellten Füllstandschalter 1 bzw. Sensorelemente 3 zeichnen sich dadurch aus, daß die Leitung 6 des Sensorelements 3 als Verzögerungsleitung ausgestaltet ist, das Sensorelement 3 ein in Einbauposition des Füllstandschalters 1 dem Medium zugewandtes Fenster 7 aufweist und wenigstens ein Teil der Leitung 6 über das Fenster von dem Medium elektrisch beeinflußbar ist.

Im Unterschied zu Füllstandmeßgeräten, die eine Verzögerungsleitung verwenden und nach dem Prinzip der Zeitbereichs-Reflektometrie arbeiten, kommt es bei den dargestellten Füllstandschaltern 1 bzw. Sensorelementen 3 für Füllstandschalter 1 nicht darauf an, daß die Leitung 6 in die Meßrichtung erstreckt ist, vielmehr ist beabsichtigt, die Leitung 6 auf einen kleinen Bereich zu beschränken, so daß ein definierter Erfassungspunkt des Medium-Füllstandes möglich ist. Die Verwendung einer Verzögerungsleitung ist im wesentlichen darin begründet, daß die Erfassung von verzögerten reflektierten Anteilen des Sendesignals einfacher möglich ist als von unverzögert ausgebreiteten Signalen, vor allem da der Abstand zwischen dem Sender 4 und der Leitung 6 im Bereich des Fensters 7 extrem kurz ist und die Erfassung von Signallaufzeiten von unverzögerten Signalen über diese Distanz nur mit erheblichem meßtechnischen Aufwand zu realisieren wäre.

In allen dargestellten Ausführungsbeispielen ist die Leitung 6 in einer flächig dichten Konfiguration angeordnet, wobei die Leitung 6 in allen dargestellten Ausführungsbeispielen - insbesondere in Fig. 2 hervorgehoben - aus einer Hinleitung 6a und einer Rückleitung 6b besteht, wobei das eine Ende 8a der Hinleitung 6a und das eine Ende 9a der Rückleitung 6b mit dem Sender 4 verbunden ist, was im einzelnen jedoch nicht dargestellt ist. Das andere Ende 8b der Hinleitung 6a und das andere Ende 9b der Rückleitung 6b sind jeweils über ein Verbindungsmittel elektrisch miteinander verbunden, indem nämlich die Leitung 6 in diesem Umkehrpunkt kontinuierlich ausgeführt ist.

In den Fig. 1, 2 und 3 bis 8 ist die Leitung 6 nach Art einer Spirale ausgestaltet, wohingegen die Leitung 6 in Fig. 3 meanderförmig ausgestaltet ist. In beiden Fällen kann aufgrund der eng aneinanderliegenden Schlaufen der Leitung 6 auf kleiner Fläche eine erhebliche Länge der Leitung 6 und damit eine erhebliche Verlängerung der Signallaufzeit realisiert werden.

In den in den Fig. 1 bis 8 dargestellten Ausführungsbeispielen ist die Leitung 6 auf einer Trägerschicht 10 realisiert, wobei diese aus einer Keramikschicht besteht, die in Niedertemperatur-Einbrand-Keramik-Technologie hergestellt worden ist (LTCC). Vorteil dieser Technologie ist, daß auch bei verhältnismäßig großer Gesamtdicke des Sensorelements 3 und gegebenenfalls des Fensters 7 dennoch sehr dünne Schichten zwischen der eigentlichen Leitung 6 des Sensorelements 3 und dem Inneren des Behälters 2 hergestellt werden können.

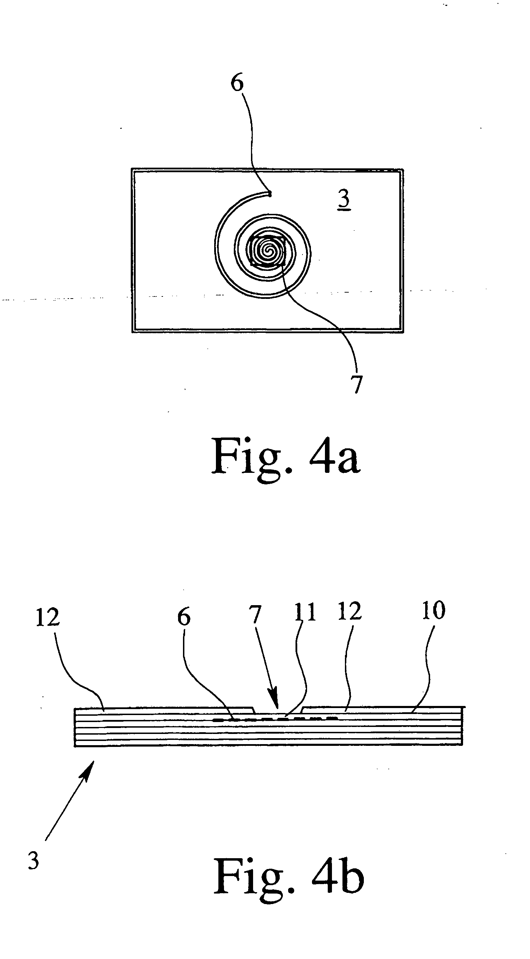

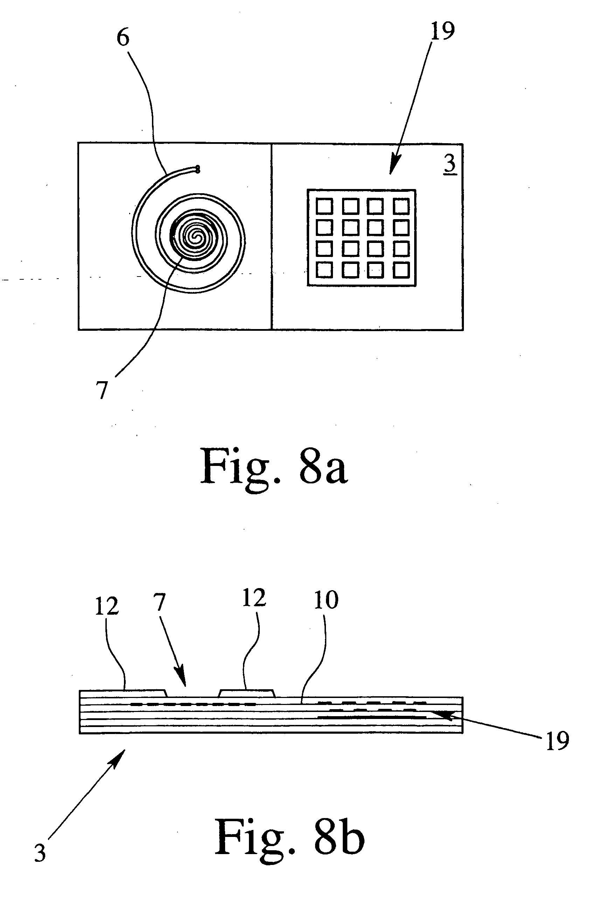

In allen Abbildungen ist das Fenster durch eine dünne dielektrische Schicht 11 im elektrisch beeinflußbaren Bereich der Leitung 6 gebildet, vorliegend nämlich durch eine Keramikschicht. Im Fall der Ausführungsbeispiele gemäß den Fig. 1 bis 3 und 6 erstreckt sich das Fenster 7 einfach über den Bereich, über den sich Leitung 6 ausdehnt. Im Falle der in den Fig. 4 und 8 dargestellten Ausführungsbeispielen wird der Rahmen des Fensters 7 durch einen weiteren mediumseitigen Auftrag 12, vorliegend nämlich durch Keramikschichten, gebildet. Durch die Beabstandung des Mediums durch den Auftrag 12 von der Leitung 6 ist das Sensorelement 3 in diesem Bereich unempfindlich gegenüber kontaktierendem Medium; der sensitive Bereich des Sensorelements 3 wird einzig durch das Fenster 7 definiert.

In den Ausführungsbeispielen 5 und 7 wird das Fenster dadurch gebildet, daß im Bereich des Fensters 7 verlaufende Teile der Leitung 6 auf oder in einer oberen Trägerschicht 10 vorgesehen sind und jenseits des Fensters 7 verlaufende Teile der Leitung 6 auf oder in einer tieferen Trägerschicht 13 vorgesehen sind. Durch die Anordnung der Leitungen 6 in mehreren - vorliegend zwei - Ebenen läßt sich die Beabstandung von Teilen der Leitung 6 von dem Medium in gleicher Weise realisieren. Die in den Fig. 1, 2, 5 und 7 dargestellten Ausführungsbeispiele haben darüber hinaus den Vorteil, daß die mediumseitige Oberfläche des Sensorelements 3 glatt ist und daher besonders einfach zu reinigen ist bzw. bei einer geeigneten Beschichtung überhaupt keine Angriffsfläche für Mediumanhaftungen bietet.

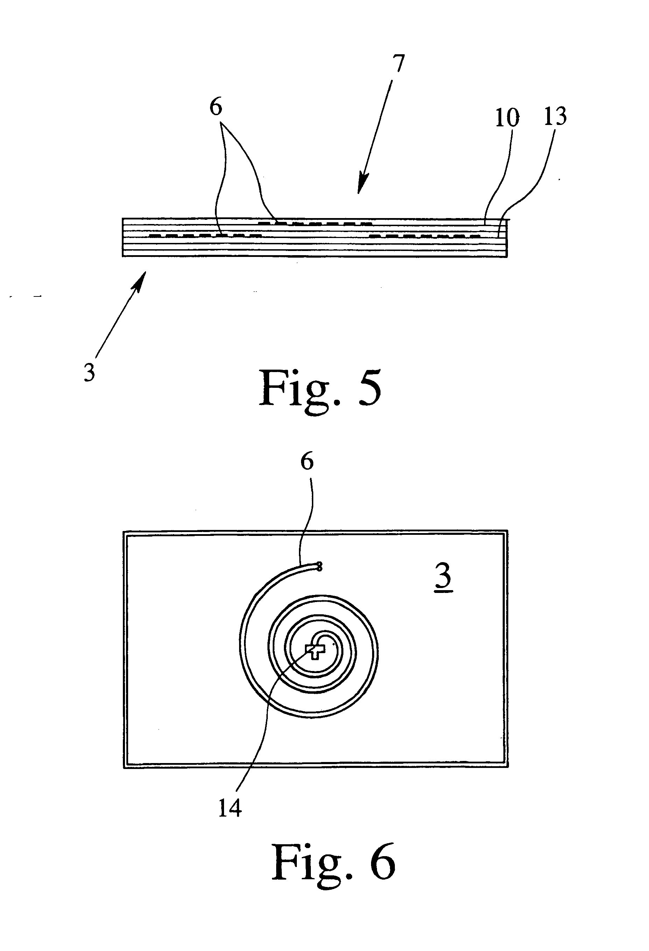

Das in Fig. 6 dargestellte Sensorelement 3 weist eine Leitung 6 mit einer elektrischen Soll-Unstetigkeitsstelle 14 auf. Bei dieser Soll-Unstetigkeitsstelle 14 wird ein Impedanzsprung in der Leitung 6 durch eine geometrische Unregelmäßigkeit im Leitungsverlauf erzielt. Diese elektrische Soll-Unstetigkeitsstelle 14 sorgt dafür, daß ein Teil des Sendesignals reflektiert wird. Dieses reflektierte Sendesignal kann beispielsweise zu einer eigenständigen Fehlerdiagnose bzw. Funktionsüberwachung des Füllstandschalters 1 dienen. Bei dem Sensor 3 gemäß Fig. 6 ist die Soll-Unstetigkeitsstelle 14 am Ende der Leitung 6 vorgesehen, was den Vorteil hat, daß die gesamte Länge der Leitung 6 funktionsüberwacht werden kann.

Andere - hier nicht dargestellte - Ausführungsbeispiele weisen derartige Soll-Unstetigkeitsstellen im Bereich außerhalb des Fensters auf, wodurch zwar nicht die gesamte Leitungslänge überwachbar ist, aber beispielsweise Reflexionen der Soll-Unstetigkeitsstelle unterschieden werden können von Reflexionen des Sendesignals, die durch Medium im beeinflußbaren der Leitung verursacht worden sind.

Bei dem Füllstandschalter 1 gemäß Fig. 1 sind der Sender 4 und die Auswerteeinheit 5 auf der dem Medium abgewandten Seite des Sensorelements 3 angeordnet, nämlich auf der dem Medium abgewandten äußersten Keramikschicht 15. Dies hat den Vorteil, daß kein separates Trägermedium für die elektronische Beschaltung des Sensorelements 3 vorgesehen werden muß. Bei dem Ausführungsbeispiel gemäß Fig. 1 sind der Sender 4 und die Auswerteeinheit 5 als separate Bauteile dargestellt, dies ist jedoch nicht zwingend. Vielmehr sind ohne weiteres andere Ausführungsbeispiele denkbar, bei denen der Sender und die Auswerteeinheit als ein einziges integriertes elektronisches Bauteil ausgeführt sind oder bei denen der Sender und/oder die Auswerteeinheit aus mehreren diskreten Bauelementen bestehen bzw. besteht.

In Fig. 1 ist ferner dargestellt, daß die dem Medium abgewandte Seite des Sensorelements 3 von einem Gehäuse 16 umgeben ist, wobei es sich bei dem Gehäuse 16 um ein metallisches Gehäuse handelt. Der Zwischenraum zwischen der dem Medium abgewandten Seite des Sensorelements 3 und dem Gehäuse 16 ist mit einer aushärtenden Vergußmasse 17 vergossen, wobei diese Vergußmasse 17 ein elektrisch isolierendes Gießhartz ist. Diese Ausgestaltung hat den Vorteil, daß der Füllstandschalter 1 bzw. das Sensorelement 3 extrem druckresistent ist, da sich das Sensorelement 3 bei der Beaufschlagung mit den durch das Medium übertragenen Druckkräften über die Vergußmasse 17 auf dem Gehäuse 16 abstützen kann.

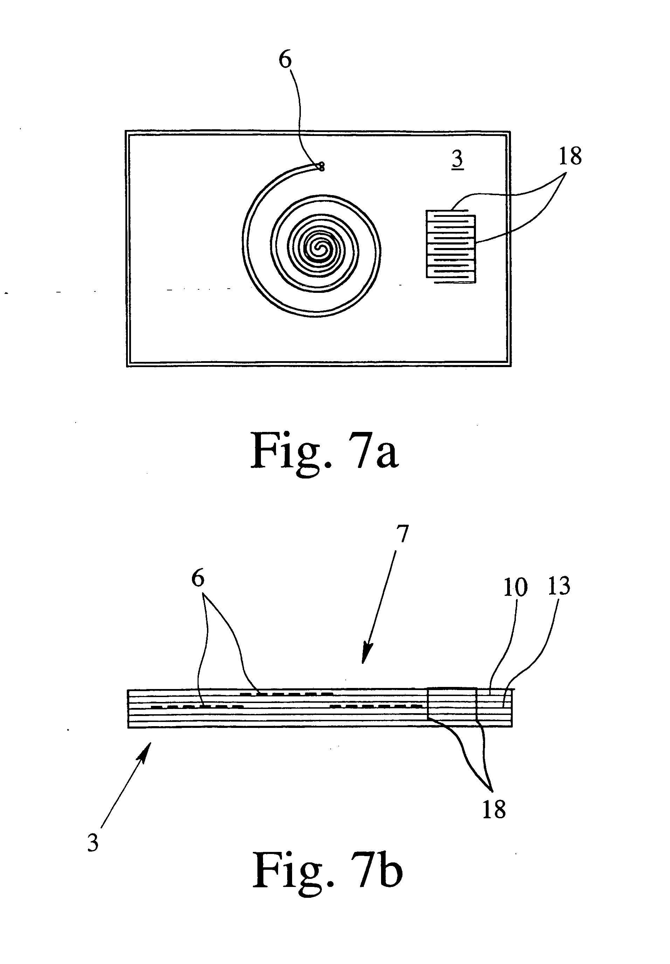

Bei dem Sensorelement 3 gemäß den Fig. 7a, 7b ist auf der dem Medium zugewandten Außenseite des Sensorelements 3 eine Elektrodenstruktur 18 zur Leitfähigkeitsmessung vorgesehen, wobei diese Elektrodenstruktur 18 außerhalb des Fensters 7 vorgesehen ist und direkt von dem Medium kontaktierbar ist. Die Elektrodenstruktur 18 besteht aus interdigitierenden, eng benachbarten Leiterbahnen, so daß nur geringe Spannungen nötig sind, um ein geeignetes Feststellungssignal für die Leitfähigkeit zu erhalten. In der Figur ist nicht weiter dargestellt, wie die Elektrodenstruktur 18 weiter angeschlossen ist, dies ist vorliegend auch nicht von Belang.

Bei den Ausführungsbeispielen gemäß den Fig. 8a, 8b ist auf dem Sensorelement 3 eine Antennenstruktur 19 realisiert, mit der elektromagnetische Wellen in Richtung auf das Medium abstrahlbar und elektromagnetische Wellen aus Richtung des Mediums empfangbar sind, wobei die Antennenstruktur 19 als Panelantenne ausgestaltet ist mit einer vergleichsweise guten, gerichteten Strahlungscharakteristik. In Fig. 8b ist der auf mehrere Keramikschichten verteilte Aufbau der Antennenstruktur 19 zu erkennen, wobei über einem unteren metallischen Reflektor eine Schicht aus mehreren Dipol-Elementen folgt und auf diese Schicht eine daran angepaßte metallische Maske folgt, wobei diese drei Schichten jeweils durch eine Keramikschicht voneinander beabstandet sind. Mit dem Sensorelement gemäß Fig. 8a und 8b ist in gewissen Grenzen eine Messung des Abstands des Sensorelements 3 von dem Medium möglich.

Insgesamt stellen sowohl die Elektrodenstruktur 18 gemäß Fig. 7a, 7b als auch die Antennenstruktur 19 gemäß Fig. 8a, 8b Maßnahmen dar, mit deren Hilfe eine redundante Erfassung des Mediums möglich ist. Dies erhöht in ganz erheblichem Maße die Ausfallsicherheit und die Selbsttestmöglichkeiten der so ausgestatteten Füllstandschalter bzw. der so ausgestatteten Sensorelemente 3. Selbstverständlich lassen sich alle Maßnahmen auch in einem einzigen Sensorelement 3 kombinieren.

Insgesamt sind der Sender 4 und die Auswerteeinheit 5 so ausgestaltet, daß die Leitung 6 mit einem elektromagnetischen Signal beaufschlagbar ist und - im Fall des Ausführungsbeispiels gemäß Fig. 8a, 8b - die Antennenstruktur 19 mit einem elektromagnetischen Signal beaufschlagbar ist und die Laufzeit eines an einer Unstetigkeitsstelle der Leitung 6 reflektierten elektromagnetischen Signals bestimmt werden kann und/oder die Laufzeit eines über die Antennenstruktur 19 abgegebenen, an dem Medium reflektierten und von der Antennenstruktur 19 wieder erfaßten elektromagnetischen Signals bestimmt werden kann.

## Patentansprüche

1. Füllstandschalter zur Erfassung des Füllstandes eines Mediums in einem Behälter (2), mit einem Sensorelement (3) zur Kontaktierung des Mediums, mit einem Sender (4) zur Beaufschlagung des Sensorelements (3) mit einem elektromagnetischen Sendesignal und mit einer Auswerteeinheit (5) zur Erfassung eines Empfangssignals von dem Sensorelement (3), wobei das Sensorelement (3) wenigstens eine Leitung (6) zur Führung des Sendesignals umfaßt und die Leitung (6) des Sensorelements (3) als Verzögerungsleitung ausgestaltet ist, wobei die Leitung (6) auf oder in wenigstens einer Trägerschicht (10) realisiert ist,
**dadurch gekennzeichnet,**
**daß** das Sensorelement (3) ein in Einbauposition des Füllstandschalters dem Medium zugewandtes Fenster (7) aufweist und ein Teil der Leitung (6) über das Fenster (7) von dem Medium elektrisch beeinflußbar ist, wobei das Sensorelement (3) im Bereich eines Rahmens unempfindlich gegenüber dem Medium ist,
**daß** das Fenster (7) durch eine dünne dielektrische Schicht (11) im elektrisch beeinflußbaren Bereich der Leitung (6) gebildet ist, wobei der Rahmen des Fensters (7) durch einen weiteren mediumseitigen Auftrag (12) gebildet ist oder wobei der Rahmen des Fensters (7) dadurch gebildet ist, daß die im Bereich des Fensters (7) verlaufenden Teile der Leitung (6) auf oder in einer oberen Trägerschicht (13) vorgesehen sind und die jenseits des Fensters (7) verlaufenden Teile der Leitung (6) auf oder in einer tieferen Trägerschicht vorgesehen sind.

2. Füllstandschalter nach Anspruch 1, **dadurch gekennzeichnet, daß** die Leitung (6) zumindest teilweise in einer flächigen Konfiguration, insbesondere einer flächig dichten Konfiguration, angeordnet ist und/oder die Leitung (6) aus einer Hinleitung (6a) und einer Rückleitung (6b) besteht, wobei das eine Ende (8a) der Hinleitung (6a) und das eine Ende (9a) der Rückleitung (6b) mit dem Sender (4) und/oder der Auswerteeinheit (5) verbunden bzw. verbindbar sind, insbesondere wobei das andere Ende (8b) der Hinleitung (6a) und das andere Ende (9b) der Rückleitung (6b) über Verbindungsmittel elektrisch miteinander verbunden oder verbindbar sind.

3. Füllstandschalter nach Anspruch 2, **dadurch gekennzeichnet, daß** die flächige Konfiguration der Leitung (6) nach Art einer Spirale und/oder eines Mäanders und/oder von verbundenen Kreissegmenten ausgestaltet ist.

4. Füllstandschalter nach einem der Ansprüche 1 bis 3, **dadurch gekennzeichnet, daß** die Leitung (6) auf oder in einer Keramikschicht als Trägerschicht (10) realisiert ist, insbesondere auf oder in einer Niedertemperatur- oder einer Hochtemperatur-Einbrand-Keramik.

5. Füllstandschalter nach einem der Ansprüche 1 bis 4, **dadurch gekennzeichnet, daß** das Fenster (7) durch eine Glas- oder Keramikschicht als dünne dielektrische Schicht (11) im elektrisch beeinflußbaren Bereich der Leitung (6) gebildet ist, insbesondere wobei der Rahmen des Fensters (7) durch Keramikschichten als weiterer mediumseitiger Auftrag (12) gebildet ist.

6. Füllstandschalter nach einem der Ansprüche 1 bis 5, **dadurch gekennzeichnet, daß** die Leitung (6) oder die Umgebung im Einflußbereich der Leitung (6) wenigstens eine elektrische Soll-Unstetigkeitsstelle (14) aufweist, wobei die Unstetigkeitsstelle (14) im Bereich außerhalb des Fensters (7) und/oder im Bereich innerhalb des Fensters (7), hier insbesondere im Bereich des anderen Endes (8b) der Hinleitung (6a) und des anderen Endes (9b) der Rückleitung (6b) vorgesehen ist.

7. Füllstandschalter nach einem der Ansprüche 1 bis 6, **dadurch gekennzeichnet, daß** auf der dem Medium abgewandten Seite des Sensorelements der Sender (4) und/oder die Auswerteeinheit (5) angeordnet sind bzw. ist, insbesonderte auf der dem Medium abgewandten Seite der Trägerschicht (10), insbesondere auf oder in der dem Medium abgewandten äußersten Keramikschicht (15).

8. Füllstandschalter nach einem der Ansprüche 1 bis 7, **dadurch gekennzeichnet, daß** die dem Medium abgewandte Seite des Sensorelements (3) von einem Gehäuse (16) zumindest teilweise umgeben ist, insbesondere von einem metallischen Gehäuse (16).

9. Füllstandschalter nach Anspruch 8, **dadurch gekennzeichnet, daß** ein Zwischenraum zwischen der dem Medium abgewandten Seite des Sensorelements (3) und dem Gehäuse (16) vergossen ist, insbesondere mit einer aushärtenden Vergußmasse (17), insbesondere mit einem elektrisch isolierenden Gießharz.

10. Füllstandschalter nach einem der Ansprüche 1 bis 9, **dadurch gekennzeichnet, daß** auf oder in der dem Medium zugewandten Außenseite des Sensorelements (3) eine Elektrodenstruktur (18) zur Leitfähigkeitsmessung vorgesehen ist, wobei die Elektrodenstruktur (18) vorzugsweise außerhalb des Fensters (7) vorgesehen ist, wobei die Elektrodenstruktur (18) insbesondere direkt von dem Medium kontaktierbar ist.

11. Füllstandschalter nach einem der Ansprüche 1 bis 10, **dadurch gekennzeichnet, daß** auf oder in dem Sensorelement (3) eine Antennenstruktur (19) realisiert ist, mit der elektromagnetische Wellen im wesentlichen in Richtung auf das Medium abstrahlbar und elektromagnetische Wellen aus Richtung des Mediums empfangbar sind, wobei die Antennenstruktur (19) insbesondere als Flachantenne mit gerichteter Strahlungscharakteristik ausgestaltet ist, insbesondere als Panelantenne, insbesondere in Streifenleitertechnologie.

12. Füllstandschalter nach Anspruch 11, **dadurch gekennzeichnet, daß** die Antennenstruktur (19) mit der Leitung (6) verbunden oder verbindbar ist, insbesondere über schaltbare Verbindungsmittel mit der Leitung (6) verbindbar ist.

13. Füllstandschalter nach einem der Ansprüche 1 bis 12, **dadurch gekennzeichnet, daß** der Sender (4) und die Auswerteeinheit (5) so ausgestaltet sind, daß die Leitung (6) mit einem elektromagnetischen Signal beaufschlagbar ist und/oder die Antennenstruktur (19) mit einem elektromagnetischen Signal beaufschlagbar ist und die Laufzeit eines an einer Unstetigkeitsstelle der Leitung (6) reflektierten elektromagnetischen Signals bestimmt werden kann und/oder die Laufzeit eines über die Antennenstruktur (19) abgegebenen, an dem Medium reflektierten und von der Antennenstruktur (19) wieder erfaßten elektromagnetischen Signals bestimmt werden kann.

## Claims

1. Fill level switch for measuring the fill level of a medium in a container (2), having a sensor element (3) for contacting the medium, having a sender (4) for applying an electromagnetic emission signal to the sensor element (3) and having an evaluation unit (5) for detecting a received signal from the sensor element (3), wherein the sensor element (3) includes at least one cable (6) for guiding the emission signal and the cable (6) of the sensor element (3) is designed as a delay line, wherein the cable (6) is implemented on or in at least one carrying layer (10),
**characterized in**
**that** the sensor element (3) has a window (7) facing the medium in the mounting position of the fill level switch and a part of the cable (6) can be electrically influenced by the medium via the window (7), wherein the sensor element (3) is not sensitive to the medium in the area of a frame, that the window (7) is formed by a thin dielectric layer (11) in the electrically influenceable area of the cable (6), wherein the frame of the window (7) is formed by a further medium-side coat (12) or wherein the frame of the window (7) is formed in that the part of the cable (6) running in the area of the window (7) is provided on or in an upper carrying layer (13) and the parts of the cable (6) running beyond the window (7) are provided on or in a lower carrying layer.

2. Fill level switch according to claim 1, **characterized in that** the cable (6) is at least partially arranged in a flat configuration, in particular a flat dense configuration and/or the cable (6) consists of an outgoing line (6a) and a return line (6b), wherein the one end (8a) of the outgoing line (6a) and the one end (9a) of the return line (6b) are connected or can be connected to the sender (4) and/or the evaluation unit (5), in particular wherein the other end (8b) of the outgoing line (6a) and the other end (9b) of the return line (6b) are or can be electrically connected to one another.

3. Fill level switch according to claim 2, **characterized in that** the flat configuration of the cable (6) is formed as a spiral and/or meander and/or using connected circle segments.

4. Fill level switch according to any one of claims 1 to 3, **characterized in that** the cable (6) is implemented on or in at least one carrying layer (10), in particular on or in a ceramic layer as carrying layer (10), in particular on or in a low temperature or a high temperature cofired ceramic.

5. Fill level switch according to any one of claims 1 to 4, **characterized in that** the window (7) is formed by a glass or ceramic layer as thin dielectric layer (11) in the electrically influenceable area of the cable (6), in particular wherein the frame of the window (7) is formed by ceramic layers as further medium-side coat (12).

6. Fill level switch according to any one of claims 1 to 5, **characterized in that** the cable (6) or the environment in the impact area of the cable (6) has at least one electric reference point of discontinuity (14), wherein the point of discontinuity (14) is provided in the area outside of the window (7) and/or in the area inside of the window (7), here, in particular, in the area of the other end (8b) of the outgoing line (6a) and the other end (9b) of the return line (6b).

7. Fill level switch according to any one of claims 1 to 6, **characterized in that** the sender (4) and/or the evaluation unit (5) are arranged on the side of the sensor element turned away from the medium, in particular on the side of the carrying layer (10) turned away from the medium, in particular on or in the outermost ceramic layer (15) turned away from the medium.

8. Fill level switch according to any one of claims 1 to 7, **characterized in that** the side of the sensor element (3) turned away from the medium is at least partially enclosed by a housing (16), in particular by a metallic housing (16).

9. Fill level switch according to claim 8, **characterized in that** a space between the side of the sensor element (3) turned away from the medium and the housing (16) is cast, in particular with a hardening casting compound (17), in particular with an electrically insulating casting resin.

10. Fill level switch according to any one of claims 1 to 9, **characterized in that** an electrode structure (18) for measuring conductivity is provided on or in the outer side of the sensor element (3) facing the medium, wherein the electrode structure (18) is preferably provided outside of the window (7), wherein in particular the electrode structure (18) can be directly contacted by the medium.

11. Fill level switch according to any one of claims 1 to 10, **characterized in that** an antenna structure (19) is implemented on or in the sensor element (3), with which electromagnetic waves can be emitted essentially in the direction of the medium and electromagnetic waves can be received from the direction of the medium, wherein the antenna structure (19), in particular, is designed as a flat antenna having a directed emission characteristic, in particular as a micro strip antenna, in particular using strip line technology.

12. Fill level switch according to claim 11, **characterized in that** the antenna structure (19) is or can be connected with the cable (6), in particular is connected with the cable (6) via switchable connecting means.

13. Fill level switch according to any one of claims 1 to 12, **characterized in that** the sender (4) and the evaluation unit (5) are designed so that the cable (6) can be impinged with an electromagnetic signal and/or the antenna structure (19) can be impinged with an electromagnetic signal and the round-trip time of an electromagnetic signal reflected by a point of discontinuity of the cable (6) can be determined and/or the round-trip time of an electromagnetic signal emitted by the antenna structure (19), reflected by the medium and detected again by the antenna structure (19) can be determined.

## Revendications

1. Contacteur de niveau destiné à saisir le niveau d'un fluide dans un récipient (2), le contacteur présentant
un élément de capteur (3) qui assure le contact avec le fluide,
un émetteur (4) qui applique un signal électromagnétique d'émission sur l'élément de capteur (3) et
une unité d'évaluation (5) qui saisit un signal de réception provenant de l'élément de capteur (3),
l'élément de capteur (3) comprenant au moins un conducteur (6) qui amène le signal d'émission et le conducteur (6) de l'élément de capteur (3) étant configuré comme conducteur à retard, le conducteur (6) étant réalisé sur ou dans au moins une couche de support (10),
**caractérisé en ce que**
l'élément de capteur (3) présente une fenêtre (7) tournée vers le fluide lorsque le commutateur de niveau est en position montée,
**en ce que** le fluide peut influencer électriquement une partie du conducteur (6) par l'intermédiaire de la fenêtre (7),
**en ce que** l'élément de capteur (3) est insensible vis-à-vis du fluide au niveau d'un bâti,
**en ce que** la fenêtre (7) est formée par une mince couche diélectrique (11) située dans la partie électriquement influençable du conducteur (6),
**en ce que** le bâti de la fenêtre (7) est formé par une autre application (12) située du côté du fluide ou
**en ce que** le bâti de la fenêtre (7) est formé par le fait que les parties du conducteur (6) qui s'étendent au niveau de la fenêtre (7) sont prévues sur ou dans une couche supérieure de support (13) et
**en ce que** les parties du conducteur (6) qui s'étendent de chaque côté de la fenêtre (7) sont prévues sur ou dans une couche de support plus profonde.

2. Contacteur de niveau selon la revendication 1, **caractérisé en ce qu'**au moins une partie du conducteur (6) est disposée en une configuration aplatie, en particulier une configuration aplatie compacte et/ou **en ce que** le conducteur (6) est constitué d'un conducteur aller (6a) et d'un conducteur retour (6b), une extrémité (8a) du conducteur aller (6a) et une extrémité (9a) du conducteur retour (6b) étant reliées ou pouvant être reliées à l'émetteur (4) et/ou à l'unité d'évaluation (5) et en particulier **en ce que** l'autre extrémité (8b) du conducteur aller (6a) et l'autre extrémité (9b) du conducteur retour (6b) sont reliées électriquement l'une à l'autre ou peuvent l'être par l'intermédiaire de moyens de liaison.

3. Contacteur de niveau selon la revendication 2, **caractérisé en ce que** la configuration aplatie du conducteur (6) a la forme d'une spirale, d'un méandre et/ou est formée de segments de cercle reliés entre eux.

4. Contacteur de niveau selon l'une des revendications 1 à 3, **caractérisé en ce que** le conducteur (6) est réalisé sur ou dans une couche céramique servant de couche de support (10) et en particulier sur ou dans une céramique cuite à basse température ou à haute température.

5. Contacteur de niveau selon l'une des revendications 1 à 4, **caractérisé en ce que** la fenêtre (7) est formée par une couche de verre ou de céramique servant de mince couche diélectrique (11) dans la partie électriquement influençable du conducteur (6) et en particulier **en ce que** le bâti de la fenêtre (7) est formé de couches céramiques utilisées comme autres applications (12) situées du côté du fluide.

6. Contacteur de niveau selon l'une des revendications 1 à 5, **caractérisé en ce que** le conducteur (6) ou son environnement au niveau où le conducteur (6) est influencé présentent au moins un emplacement (14) d'instabilité électrique de consigne, l'emplacement d'instabilité (14) étant prévu dans la partie située à l'extérieur de la fenêtre (7) et/ou dans la partie située à l'intérieur de la fenêtre (7) et dans ce cas en particulier au niveau de l'autre extrémité (8b) du conducteur aller (6a) et de l'autre extrémité (9b) du conducteur retour (6b).

7. Contacteur de niveau selon l'une des revendications 1 à 6, **caractérisé en ce que** l'émetteur (4) et/ou l'unité d'évaluation (5) sont disposés sur le côté de l'élément de capteur non tourné vers le fluide, en particulier sur le côté de la couche de support (10) non tourné vers le fluide et en particulier sur ou dans la couche céramique (15) extérieure non tournée vers le fluide.

8. Contacteur de niveau selon l'une des revendications 1 à 7, **caractérisé en ce que** le côté de l'élément de capteur (3) non tourné vers le fluide est entouré au moins en partie par un boîtier (16) et en particulier par un boîtier métallique (16).

9. Contacteur de niveau selon la revendication 8, **caractérisé en ce qu'**un espace intermédiaire entre le côté de l'élément de capteur (3) non tourné vers le fluide et le boîtier (16) est encapsulé, en particulier par une pâte de coulée (17) durcie et en particulier par une résine de coulée électriquement isolante.

10. Contacteur de niveau selon l'une des revendications 1 à 9, **caractérisé en ce qu'**une structure d'électrode (18) qui mesure la conductivité est prévue sur le côté extérieur de l'élément de capteur (3) tourné vers le fluide, la structure d'électrode (18) étant prévue de préférence à l'extérieur de la fenêtre (7), la structure d'électrode (18) pouvant en particulier être mise en contact direct avec le fluide.

11. Contacteur de niveau selon l'une des revendications 1 à 10, **caractérisé en ce qu'**une structure d'antenne (19) par laquelle des ondes électromagnétiques peuvent être émises essentiellement en direction du fluide et des ondes électromagnétiques provenant du fluide peuvent être reçues est réalisée sur ou dans l'élément de capteur (3), la structure d'antenne (19) étant configurée en particulier comme antenne plate à caractéristique d'émission orientée, en particulier comme antenne en panneau, notamment réalisée à l'aide de la technologie des conducteurs en ruban.

12. Contacteur de niveau selon la revendication 11, **caractérisé en ce que** la structure d'antenne (19) est reliée ou peut être reliée au conducteur (6) et en particulier peut être reliée au conducteur (6) par des moyens de liaison commutables.

13. Contacteur de niveau selon l'une des revendications 1 à 12, **caractérisé en ce que** l'émetteur (4) et l'unité d'évaluation (5) sont configurés de telle sorte qu'un signal électromagnétique puisse être appliqué sur le conducteur (6), **en ce qu'**un signal électromagnétique puisse être appliqué sur la structure d'antenne (19) et **en ce que** le temps de parcours d'un signal électromagnétique réfléchi en un emplacement d'instabilité du conducteur (6) peut être déterminé et/ou **en ce que** le temps de parcours d'un signal électromagnétique émis par l'intermédiaire de la structure d'antenne (19), réfléchi par le fluide et saisi de nouveau par la structure d'antenne (19) peut être déterminé.
